# EUROPEAN PATENT SPECIFICATION

(11) **EP 3 665 412 B1**
(45) Date of publication and mention of the grant of the patent: **04.03.2026**
(21) Application number: 18843001.1
(22) Date of filing: 13.08.2018
(51) Int. Cl.: G06K 19/07, F16L 55/00, F16L 37/091, G08C 17/02, B29C 65/00

(54) **FLUID LINE CONNECTOR AND ASSEMBLY WITH SECUREMENT DETECTION**
FLUIDLEITUNGSVERBINDER UND ANORDNUNG MIT BEFESTIGUNGSDETEKTION
RACCORD ET ENSEMBLE DE CONDUITE DE FLUIDE À DÉTECTION DE FIXATION

(30) Priority: 11.08.2017 US 201762544057 P
(43) Date of publication of application: 17.06.2020
(73) Proprietor: Norma U.S. Holding LLC, Auburn Hills, MI 48326 (US)
(72) Inventor: IGNACZAK, Brian, T., Rochester MI 48307 (US); PETERSON, Dave, Ortonville MI 48462 (US); STOLL, Viktor, 63538 Großkrotzenburg (DE); SCHINDLER, René, 63477 Maintal (DE)
(74) Representative: Patentanwälte Olbricht Buchhold Keulertz
(86) International application number: PCT/US2018/046528
(87) International publication number: WO 2019/033109

(56) References cited:
- DE-A1- 102005 029 061
- DE-A1- 102009 014 648
- DE-U1- 202004 002 116
- JP-B2- 4 198 472
- US-A- 5 604 681
- US-A- 5 604 681
- US-A1- 2004 036 273
- US-A1- 2004 036 273
- US-A1- 2006 076 419
- US-A1- 2006 076 419
- US-A1- 2016 178 101
- US-A1- 2017 089 496
- US-A1- 2018 266 602

## Description

### TECHNICAL FIELD

This disclosure relates generally to connector assemblies used to join fluid lines together and, more particularly, to ways of detecting proper and full engagement of connector assembly members.

### BACKGROUND

Connector assemblies, especially those with quick-connect functionality, are commonly used to join fluid lines together in vehicle applications. One example is coolant fluid lines in electric vehicle automobiles. For initial assembly and inspection and subsequent service, visual measures are sometimes employed in the design and construction of a connector assembly in order to verify that a proper and full engagement has been made between members of the connector assembly. Examples include secondary latches that are closable upon full engagement, and windows framed in one the members of the connector assembly for viewing engagement. These measures, as well as others like them, require physical interaction and viewing by the assembler, inspector, or servicer to ensure that a proper and full engagement has been made between the members of the connector assembly.

US 5604681 A, against which claim 1 is delimited, refers to a system for blending fluids, the system comprising a plurality of fluid sources to which utilization conduits are selectively connected. The blending operation for a predefined combination of fluids is controlled by a computer employing a software control program. An RF signal tag is mounted on each utilization conduit. When the utilization conduit is connected to a supply conduit for a given fluid source, a utilization signal input is provided to the computer and control program to provide assurance that the predefined fluids are connected for a given blending operation as well as the utilization conduit being properly locked on the supply conduit.

DE 102005029061 A1 refers to a first coupling element that has communications devices that can be interrogated from outside by a calling subscriber. A sensor connects to the communications devices when ready for operation and, when a second coupling element is present, it has a status other than when the second coupling element is not present.

### SUMMARY

The invention is defined by claim 1.

Preferred embodiments are set out in the dependent claims.

### BRIEF DESCRIPTION OF THE DRAWINGS

Embodiments of the disclosure are described with reference to the appended drawings, in which:
FIG. 1 is a perspective view of an embodiment of a fluid line connector assembly;
FIG. 2 is a partially exploded view of the fluid line connector assembly of FIG. 1;
FIG. 3 is an exploded view of a fluid line connector of the fluid line connector assembly of FIG. 1; and
FIG. 4 is a sectional view of the fluid line connector assembly of FIG. 1.

### DETAILED DESCRIPTION

Several embodiments of a fluid line connector and assembly are detailed in this description. The connectors and assemblies are designed and constructed to enable detection of proper and full securement between connectors without the necessity of the secondary latches and windows of the past that required some level of physical interaction and viewing by an assembler, inspector, or servicer at the site of securement. Instead, the connectors and assemblies of this description are provided with means in which proper and full securement can be detected via a device that is located remote of an immediate site of securement of the connectors, and the device need not necessarily make physical contact with the site of securement for detection. In this way, the connectors and assemblies are equipped for initial assembly, subsequent quality inspection, and subsequent service techniques that are automated, robotic, and/or autonomous - those found, for instance, in advanced manufacturing facilities in automotive production. The connectors and assemblies hence could prove useful in many applications, such as when an immediate power supply is not readily available and not readily at-hand. This description presents the connectors and assemblies in the context of automotive fluid lines, such as coolant fluid lines in electric vehicle automobiles, but the connectors and assemblies have broader application and are suitable for use in aircraft fluid lines, marine fluid lines, agricultural fluid lines, as well as other fluid lines.

As used herein, the phrase "full securement" and its grammatical variations is used to refer to a state of securement in which a fluid-tight joint is established via the fluid line connector. Furthermore, unless otherwise specified, the terms radially, axially, and circumferentially, and their grammatical variations refer to directions with respect to the generally circular shape of the passage of the fluid line connector.

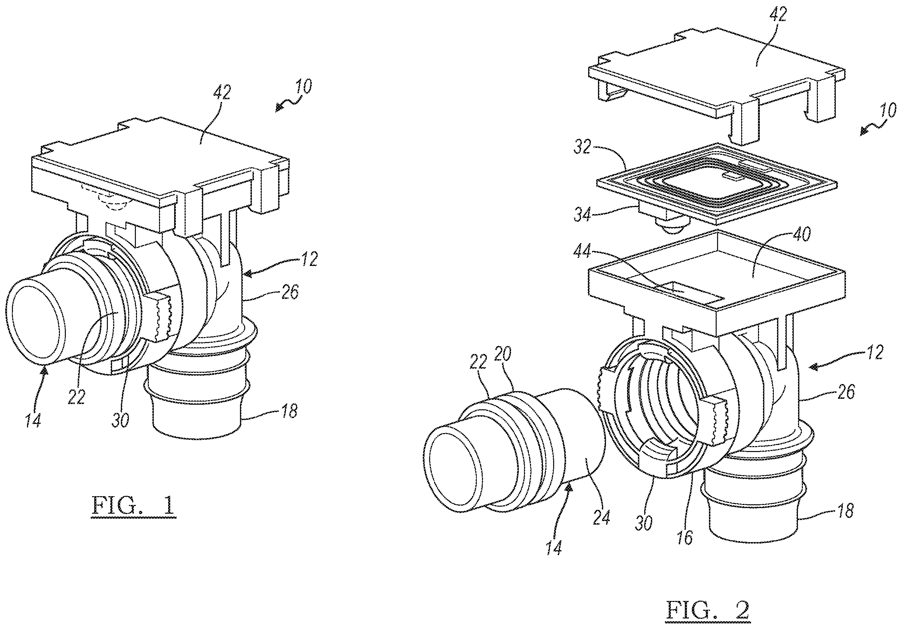

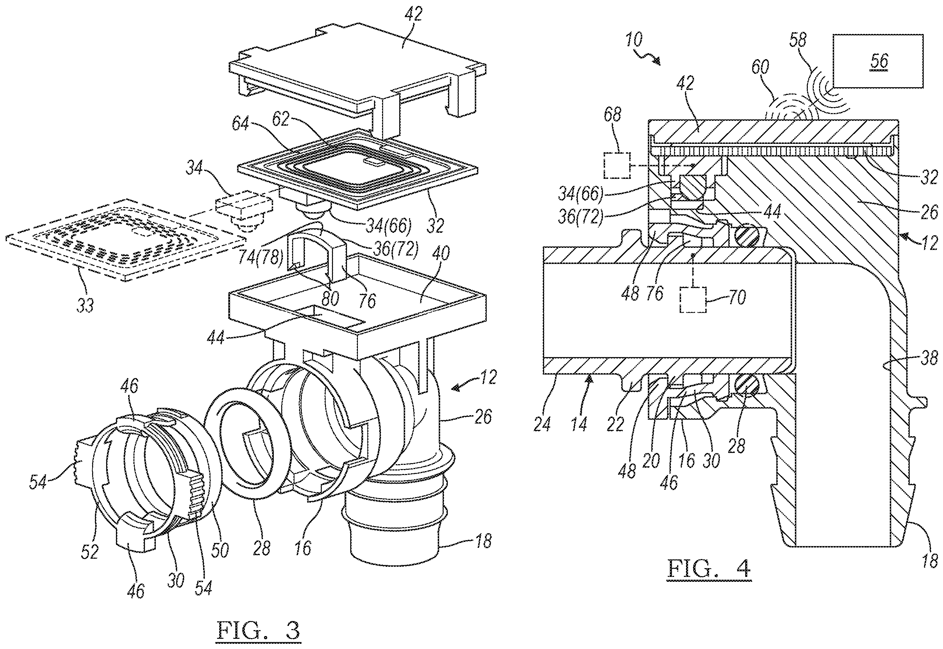

The fluid line connector and assembly can have various designs, constructions, and components in different embodiments, depending in some cases upon the application in which the fluid line connector and assembly are employed. FIGS. 1-4 present a first embodiment of a fluid line connector and assembly 10. The fluid line connector and assembly 10 here includes a fluid line connector 12 and another separate and discrete connector 14. The fluid line connector 12 has quick-connect functionality for ready connect and disconnect actions with the connector 14 and is used to join automotive fluid lines together. In this embodiment, the fluid line connector 12 is a female connector and the connector 14 is a male connector (often referred to as a spigot). The fluid line connector 12 receives insertion of the connector 14 at a first end 16 in installation, and couples to a fluid line at a second end 18. The fluid line connector 12 has an elbow and L-shaped configuration in the figures, but could have a straight and in-line configuration in other embodiments. The connector 14 could be an integral and somewhat monolithic part of a larger component such as a vehicle battery tray or heat exchanger, or could be an integral and somewhat monolithic part of a fluid line, among many possibilities. With particular reference to FIGS. 2 and 4, the connector 14 has a first flange 20 protruding radially-outboard of its body, and has a second flange 22 spaced axially from the first flange 20 and likewise protruding radially-outboard of the connector's body. The first and second flanges 20, 22 extend circumferentially around the connector 14. The connector 14 has an outer surface 24.

In this embodiment, the fluid line connector 12 includes a body 26, an o-ring 28, an insert 30, a radio-frequency identification (RFID) chip 32, a switch 34, and an actuator member 36; still, in other embodiments, the fluid line connector 12 can have more, less, and/or different components. Referring now to FIGS. 3 and 4, the body 26 has a passage 38 defined in its structure for allowing fluid-flow through the fluid line connector 12. The body 26 also has a compartment 40 for receipt and placement of the RFID chip 32. The compartment 40 is a space that is separate from the passage 38. A removable cover 42 can be provided to close the compartment 40 and enclose the RFID chip 32 therein. The body 26 further has a pass-through 44 for situating and seating the actuator member 36 within the body 26 in assembly. When the actuator member 36 is taken from the body 26 (for instance, as shown in FIG. 3), the passage 38 and compartment 40 communicate with each other by way of the pass-through 44 which is open to both of the passage 38 and compartment 40. The o-ring 28 is received within the passage 38, as perhaps depicted best by FIG. 4, and forms a seal thereat between the fluid line connector 12 and the connector 14. The insert 30 is also received within the passage 38 and is used to help retain the connector 14 when the connector 14 and fluid line connector 12 are secured together. In the example of the figures, the insert 30 has a pair of tangs 46 with hook ends 48 that capture the first flange 20 upon insertion of the connector 14 into the fluid line connector 12 to an appropriate overlapping depth, as demonstrated in FIG. 4. The insert 30 includes a first ring structure 50 and a second ring structure 52 that are bridged together by the tangs 46. Press-downs 54 on opposite sides of the second ring structure 52 can be squeezed to undo the captured first flange 20 for disassembling the connector 14 from the fluid line connector 12.

The RFID chip 32 assists in the detection of proper and full securement between the fluid line connector 12 and the connector 14. The RFID chip 32 transmits and receives radio frequency (RF) signals with an RFID interrogator 56. The RFID interrogator 56 sends an interrogating signal 58 to the RFID chip 32, which responds with an RF signal 60. In this way, proper and full securement detection is carried out with the use of RFID technologies. In a manufacturing facility, for instance, the RFID interrogator 56 can be stationed amid an assembly, inspection, and/or installation production line, and can establish an interrogation zone in which the RFID interrogator 56 seeks to intercommunicate with the RFID chip 32 as the fluid line connector and assembly 10 and larger application are transported through the securement zone. Depending on the manufacturing facility, the RFID interrogator 56 may establish an interrogation zone that spans several meters from the RFID interrogator 56. In another setting, the RFID interrogator 56 can be a mobile device such as a hand-held device. The RF signal 60 can convey various data and information to the RFID interrogator 56. In an embodiment, the information conveyed can be an indication of the state of securement between the fluid line connector 12 and the connector 14. For example, when the fluid line connector 12 and connector 14 exhibit full securement, the RF signal 60 can convey the fully secured information in the form of an ON signal to the RFID interrogator 56. The RFID interrogator 56 can in turn process the conveyed information. The information conveyed can also include a serial number, location of installation, etc.

With particular reference to FIGS. 3 and 4, the RFID chip 32 is carried by the body 26. Support between the RFID chip 32 and the body 26 can be effected in various ways. In this embodiment, the RFID chip 32 resides within the compartment 40 and is protected by the cover 42 in installation. At this location, the RFID chip 32 is shielded from exposure to fluid-flow traveling through the passage 38, and is shielded from external sources of contamination, depending on the particular application. The RFID chip 32 has an antenna 62 that exchanges (i.e., transmits and receives) RF signals, and has an integrated circuit (IC) 64 that stores data and information, among other possible functions.

The switch 34 interacts with the RFID chip 32 in order to activate and enable the RFID chip 32 to transmit and receive RF signals with the RFID interrogator 56, and in order to deactivate and disable the RFID chip 32 from transmitting and receiving RF signals. Still, the interaction can influence the functioning of the RFID chip 32 in other ways. In the embodiment presented by the figures, the switch 34 is electrically coupled with the RFID chip 32 to enable and disable the antenna 62 to and from transmitting and receiving RF signals. The switch 34 can have various designs, constructions, and components in different embodiments, depending in some cases upon the RFID chip that it interacts with and the design and construction of the accompanying connectors. For instance, the switch 34 can take mechanical, electrical, and magnetic forms. In one embodiment, and referring to FIGS. 3 and 4, the switch 34 is in the form of a button 66 mounted to the RFID chip 32. As demonstrated best by FIG. 4, the button 66 is located between the RFID chip 32 and the actuator member 36, and adjacent the pass-through 44. When impinged and physically pressed, the button 66 - due to its electrical coupling to the RFID chip 32 - activates and enables the antenna 62 to transmit and receive RF signals. A single press and release of the button 66 can activate the RFID chip 32, or a maintained impingement and pressing can activate the RFID chip 32 for the duration over which the impingement and pressing persists, depending on the embodiment. Conversely, a single press and release of the button 66 can deactivate the RFID chip 32, or an absence of a maintained impingement and pressing can deactivate the RFID chip 32 for the duration over which the impingement and pressing is lacking.

Furthermore, in other embodiments, the switch 34 can be prompted to activate and deactivate the RFID chip 32 by other means. With particular reference to FIG. 4, another embodiment carries out the prompting by use of a non-contact switch in lieu of a contact-based switch. A reed switch 68 is carried by the body 26 of the fluid line connector 12, and a magnetic component 70 is carried by the connector 14. Here, when the fluid line connector 12 and connector 14 are in full securement, the proximity between the reed switch 68 and magnetic component 70 prompts activation of the RFID chip 32. Conversely, less than full securement and the attendant remoteness of the reed switch 68 and the magnetic component 70 relative to each other deactivates the RFID chip 32. In this embodiment, the actuator member 36 need not be provided.

The actuator member 36 receives abutment amid full securement actions and at full securement between the fluid line connector 12 and the connector 14, and thereby prompts impingement of the switch 34. The actuator member 36 can have various designs, constructions, and components in different embodiments, depending in some cases upon the design and construction of the switch 34 and the accompanying connectors. In the embodiment of the figures, and referring now to FIGS. 3 and 4, the actuator member 36 spans between the passage 38 and the switch 34 to provide an interrelationship between the connector 14 and the RFID chip 32. The actuator member 36 is carried within the body 26 of the fluid line connector 12 and is situated and seated in the pass-through 44. At its location, the actuator member 36 has one end at the passage 38 and another end at the switch 34. In the embodiment of FIGS. 3 and 4, the actuator member 36 is in the form of a cam member 72. The cam member 72 is one-piece and has a U-shaped profile with a base portion 74 and a pair of prong portions 76 depending from the base portion 74. The base portion 74 has a first working surface 78 residing at the switch 34 and maintaining contact with the switch 34. And the prong portions 76 each have a second working surface 80 that reside in the passage 38 for abutment with the connector 14 upon its insertion into the fluid line connector 12. The second working surfaces 80 can be slanted relative to an axis of the connector 14 in order to ease abutment with the connector 14 and to induce the concomitant displacement of the cam member 72.

When the fluid line connector and assembly 10 is employed in use, proper and full securement can be detected via RFID technologies. The fluid line connector 12 and the connector 14 are brought together as the connector 14 is inserted into the body 26 at the first end 16. The first flange 20 comes into abutment with the cam member 72 and displaces the cam member 72 upward (relative to the orientation of the figures) and toward the button 66. The first flange 20 makes surface-to-surface abutment with the second working surfaces 80 of the cam member 72. The cam member 72 is urged upward and impinges the button 66 via surface-to-surface contact between the first working surface 78 and a confronting surface of the button 66. In this embodiment, the first flange 20 maintains abutment with the cam member 72 and the cam member 72 hence maintains impingement with the button 66 at full securement.

In another embodiment, the fluid line connector 12 includes more than a single RFID chip. With particular reference to FIG. 3, a second RFID chip 33 is provided in addition to the first RFID chip 32. And like the first RFID chip 32, the second RFID chip 33 assists in the detection of proper and full securement between the fluid line connector 12 and the connector 14. In this embodiment, both of the first and second RFID chips 32, 33 transmit and receive RF signals with the RFID interrogator 56. In an example, when the fluid line connector 12 and connector 14 exhibit full securement, the first RFID chip 32 can convey the fully secured information to the RFID interrogator 56. Conversely, when the fluid line connector 12 and connector 14 are not fully secured together, the second RFID chip 33 can convey this less-than fully secured information to the RFID interrogator 56. Further, at full securement, the second RFID chip 33 does not convey the less-than fully secured information to the RFID interrogator 56; and, when not fully secured together, the first RFID chip 32 does not convey the fully secured information to the RFID interrogator 56. As in the previous embodiment, the first and second RFID chips, 32, 33 can convey additional information such as a serial number, location of installation, etc. Whether the first RFID chip 32 conveys its fully secured information or the second RFID chip 33 conveys its less-than fully secured information is managed in part by the switch 34. In this embodiment, the switch 34 interacts with both of the first and second RFID chips 32, 33 and is electrically coupled to both of the first and second RFID chips 32, 33. The interaction and conveyance of information can be effected in different ways. For example, when impinged, the switch 34 can activate and enable the first RFID chip 32 to convey the fully secured information and, when not impinged, the switch 34 can activate and enable the second RFID chip 33 to convey the less-than fully secured information. The impingement and absence of impingement of the switch 34 can deactivate and disable the first RFID chip 32 or the second RFID chip 33.

## Claims

1. A fluid line connector (12), comprising:
a body (26) having a passage (38) for fluid-flow therethrough;
a radio-frequency identification, RFID, chip (32) carried by said body (26), said RFID chip (32) having an antenna (62) for transmitting and receiving radio frequency, RF, signals (58, 60); and
a switch (34) interacting with said RFID chip (32) in order to enable said antenna (62) to transmit and receive RF signals (58, 60) and in order to disable said antenna (62) from transmitting and receiving RF signals (58, 60); and
an actuator member (36) situated adjacent to said passage (38) of said body (26);
**characterized in that**
upon full securement of the fluid line connector (12) with another connector (14),
the other connector (14) abuts said actuator member (36) and said actuator member (36) in turn is displaced and impinges said switch (34) and said switch (34) enables said antenna (62) to transmit and receive RF signals (58, 60),
wherein said actuator member (36) is a cam member (72) with a first surface (78) residing at said passage (38) and abutting the other connector (14) and with a second surface (80) residing adjacent said switch (34) and impinging the switch (34).

2. The fluid line connector (12) of claim 1, wherein said RFID chip (32) has an integrated circuit, IC, that stores data, said antenna (62) being enabled to transmit the data upon full securement of the fluid line connector (12) with the other connector (14).

3. The fluid line connector (12) of claim 1, wherein said switch (34) is a button and, upon full securement of the fluid line connector (12) with the other connector (14), said button is impinged and said antenna (62) is enabled to transmit and receive RF signals (58, 60).

4. The fluid line connector (12) of claim 1, wherein, upon full securement of the fluid line connector (12) with the other connector (14), abutment from the other connector (14) causes an impingement with said switch (34).

5. The fluid line connector (12) of claim 1, wherein, upon full securement of the fluid line connector (12) with the other connector (14), a flange (20) of the other connector (14) abuts said first surface (78) of said cam member (72) and said second surface (80) in turn impinges said switch (34) and said switch (34) enables said antenna (62) to transmit and receive RF signals (58, 60).

6. The fluid line connector of claim 1, further comprising a second RFID chip (33) carried by said body (26), said second RFID chip (33) having a second antenna for transmitting and receiving RF signals (58,60), said switch interacting (34) with said second RFID chip (33), wherein, upon full securement of the fluid line connector (12) with the other connector (14), said switch (34) enables said first antenna (62) or said second antenna to transmit and receive RF signals (58,62).

7. A system comprising the fluid line connector (12) of claim 1, the system further comprising an RFID interrogator (56) that is adapted to exchange RF signals (58, 60) with said RFID chip (32) of the fluid line connector (12).

8. The fluid line connector of claim 1, wherein abutment from the other connector (14) to said actuator member (36) occurs via movement of the other connector (14) in an axial direction with respect to said passage (38) of said body (26), and wherein displacement of said actuator member (36) and impingement from said actuator member (36) to said switch (34) occurs via movement of said actuator member (36) in a direction that is transverse to the axial direction of movement of the other connector (14).

9. The fluid line connector of claim 1, wherein said cam member (72) has a base portion (74) and a pair of prong portions (76) extending from said base portion (74).

10. The fluid line connector of claim 9, wherein said base portion (74) has said first surface (78), and said pair of prong portions (76) has said second surface (80).

11. The fluid line connector of claim 1, wherein said cam member (72) is situated at least partially within a pass-through (44) defined in said body (26).

## Patentansprüche

1. Fluidleitungsverbinder (12), der Folgendes umfasst:
einen Körper (26) mit einem Durchgang (38) für einen Fluiddurchfluss dort hindurch;
einen von dem Körper (26) getragenen Funkfrequenzidentifikations-, RFID-, Chip (32), wobei der RFID-Chip (32) eine Antenne (62) zum Senden und Empfangen von Funkfrequenz-, RF-, Signalen (58, 60) aufweist; und
einen Schalter (34), der mit dem RFID-Chip (32) zusammenwirkt, um der Antenne (62) zu ermöglichen, RF-Signale (58, 60) zu senden und zu empfangen, und um die Antenne (62) daran zu hindern, RF-Signale (58, 60) zu senden und zu empfangen; und
ein Aktuatorelement (36), das sich angrenzend an den Durchgang (38) des Körpers (26) befindet; **dadurch gekennzeichnet, dass**
bei vollständiger Fixierung des Fluidleitungsverbinders (12) an einem anderen Verbinder (14)
der andere Verbinder (14) an dem Aktuatorelement (36) anliegt und das Aktuatorelement (36) wiederum verschoben wird und den Schalter (34) beaufschlagt und der Schalter (34) der Antenne (62) ermöglicht, RF-Signale (58, 60) zu senden und zu empfangen,
wobei das Aktuatorelement (36) ein Nockenelement (72) ist, wobei sich eine erste Oberfläche (78) an dem Durchgang (38) befindet und an dem anderen Verbinder (14) anliegt und wobei eine zweite Oberfläche (80) angrenzend an den Schalter (34) angeordnet ist und den Schalter (34) beaufschlagt.

2. Fluidleitungsverbinder (12) nach Anspruch 1, wobei der RFID-Chip (32) eine integrierte Schaltung, IC, aufweist, die Daten speichert, wobei der Antenne (62) bei vollständiger Fixierung des Fluidleitungsverbinders (12) an dem anderen Verbinder (14) ermöglicht wird, die Daten zu senden.

3. Fluidleitungsverbinder (12) nach Anspruch 1, wobei der Schalter (34) eine Taste ist und bei vollständiger Fixierung des Fluidleitungsverbinders (12) an dem anderen Verbinder (14) die Taste beaufschlagt wird und der Antenne (62) ermöglicht wird, RF-Signale (58, 60) zu senden und zu empfangen.

4. Fluidleitungsverbinder (12) nach Anspruch 1, wobei bei vollständiger Fixierung des Fluidleitungsverbinders (12) an dem anderen Verbinder (14) ein Anlagekontakt von dem anderen Verbinder (14) eine Beaufschlagung des Schalters (34) bewirkt.

5. Fluidleitungsverbinder (12) nach Anspruch 1, wobei bei vollständiger Fixierung des Fluidleitungsverbinders (12) an dem anderen Verbinder (14) ein Flansch (20) des anderen Verbinders (14) an der ersten Oberfläche (78) des Nockenelements (72) anliegt und die zweite Oberfläche (80) wiederum den Schalter (34) beaufschlagt und der Schalter (34) der Antenne (62) ermöglicht, RF-Signale (58, 60) zu senden und zu empfangen.

6. Fluidleitungsverbinder nach Anspruch 1, ferner umfassend einen von dem Körper (26) getragenen zweiten RFID-Chip (33), wobei der zweite RFID-Chip (33) eine zweite Antenne zum Senden und Empfangen von RF-Signalen (58, 60) aufweist, wobei der Schalter (34) mit dem zweiten RFID-Chip (33) zusammenwirkt, wobei der Schalter (34) bei vollständiger Fixierung des Fluidleitungsverbinders (12) an dem anderen Verbinder (14) der ersten Antenne (62) oder der zweiten Antenne ermöglicht, RF-Signale (58, 62) zu senden und zu empfangen.

7. System, umfassend den Fluidleitungsverbinder (12) nach Anspruch 1, wobei das System ferner eine RFID-Abfrageeinrichtung (56) umfasst, die dazu ausgelegt ist, RF-Signale (58, 60) mit dem RFID-Chip (32) des Fluidleitungsverbinders (12) auszutauschen.

8. Fluidleitungsverbinder nach Anspruch 1, wobei der Anlagekontakt von dem anderen Verbinder (14) an dem Aktuatorelement (36) durch eine Bewegung des anderen Verbinders (14) in einer axialen Richtung in Bezug auf den Durchgang (38) des Körpers (26) erfolgt, und wobei eine Verschiebung des Aktuatorelements (36) und eine Beaufschlagung von dem Aktuatorelement (36) auf den Schalter (34) durch eine Bewegung des Aktuatorelements (36) in einer Richtung erfolgt, die quer zu der axialen Bewegungsrichtung des anderen Verbinders (14) ist.

9. Fluidleitungsverbinder nach Anspruch 1, wobei das Nockenelement (72) einen Basisabschnitt (74) und ein Paar Zinkenabschnitte (76) aufweist, die sich von dem Basisabschnitt (74) erstrecken.

10. Fluidleitungsverbinder nach Anspruch 9, wobei der Basisabschnitt (74) die erste Oberfläche (78) aufweist und das Paar von Zinkenabschnitten (76) die zweite Oberfläche (80) aufweist.

11. Fluidleitungsverbinder nach Anspruch 1, wobei sich das Nockenelement (72) zumindest teilweise in einem in dem Körper (26) definierten Durchgang (44) befindet.

## Revendications

1. Raccord de conduite de fluide (12), comprenant :
un corps (26) ayant un passage (38) pour l'écoulement de fluide à travers celui-ci ;
une puce d'identification par radiofréquence, RFID (32) portée par ledit corps (26), ladite puce RFID (32) ayant une antenne (62) pour émettre et recevoir des signaux radiofréquence, RF (58, 60) ; et
un commutateur (34) interagissant avec ladite puce RFID (32) afin d'activer ladite antenne (62) pour émettre et recevoir des signaux RF (58, 60) et afin de désactiver ladite antenne (62) pour ne pas émettre ni recevoir de signaux RF (58, 60) ; et
un élément actionneur (36) situé adjacent audit passage (38) dudit corps (26) ; **caractérisé en ce que**
lors de la fixation complète du raccord de conduite de fluide (12) à un autre raccord (14),
l'autre raccord (14) vient en butée contre ledit élément actionneur (36) et ledit élément actionneur (36) est à son tour déplacé et frappe ledit commutateur (34) et ledit commutateur (34) active ladite antenne (62) pour émettre et recevoir des signaux RF (58, 60),
ledit élément actionneur (36) étant un élément de came (72) avec une première surface (78) résidant au niveau dudit passage (38) et venant en butée contre l'autre raccord (14) et avec une seconde surface (80) résidant adjacente audit commutateur (34) et frappant le commutateur (34).

2. Raccord de conduite de fluide (12) selon la revendication 1, dans lequel ladite puce RFID (32) a un circuit intégré, IC, qui stocke des données, ladite antenne (62) étant activée pour émettre les données lors de la fixation complète du raccord de conduite de fluide (12) à l'autre raccord (14).

3. Raccord de conduite de fluide (12) selon la revendication 1, dans lequel ledit commutateur (34) est un bouton et, lors de la fixation complète du raccord de conduite de fluide (12) à l'autre raccord (14), ledit bouton est frappé et ladite antenne (62) est activée pour émettre et recevoir des signaux RF (58, 60).

4. Raccord de conduite de fluide (12) selon la revendication 1, dans lequel, lors de la fixation complète du raccord de conduite de fluide (12) à l'autre raccord (14), la butée de l'autre raccord (14) provoque une frappe contre ledit commutateur (34).

5. Raccord de conduite de fluide (12) selon la revendication 1, dans lequel lors de la fixation complète du raccord de conduite de fluide (12) à l'autre raccord (14), une bride (20) de l'autre raccord (14) vient en butée contre ladite première surface (78) dudit élément de came (72) et ladite seconde surface (80) frappe à son tour ledit commutateur (34) et ledit commutateur (34) active ladite antenne (62) pour émettre et recevoir des signaux RF (58, 60).

6. Raccord de conduite de fluide selon la revendication 1, comprenant en outre une seconde puce RFID (33) portée par ledit corps (26), ladite seconde puce RFID (33) ayant une seconde antenne pour émettre et recevoir des signaux RF (58, 60), ledit commutateur interagissant (34) avec ladite seconde puce RFID (33), dans lequel, lors de la fixation complète du raccord de conduite de fluide (12) à l'autre raccord (14), ledit commutateur (34) active ladite première antenne (62) ou ladite seconde antenne pour émettre et recevoir des signaux RF (58, 62).

7. Système comprenant le raccord de conduite de fluide (12) selon la revendication 1, le système comprenant en outre un interrogateur RFID (56) qui est conçu pour échanger des signaux RF (58, 60) avec ladite puce RFID (32) du raccord de conduite de fluide (12).

8. Raccord de conduite de fluide selon la revendication 1, dans lequel la butée de l'autre raccord (14) contre ledit élément actionneur (36) se produit via le mouvement de l'autre raccord (14) dans une direction axiale par rapport audit passage (38) dudit corps (26), et dans lequel le déplacement dudit élément actionneur (36) et la frappe dudit élément actionneur (36) contre ledit commutateur (34) se produisent via le mouvement dudit élément actionneur (36) dans une direction qui est transversale à la direction axiale de mouvement de l'autre raccord (14).

9. Raccord de conduite de fluide selon la revendication 1, dans lequel ledit élément de came (72) a une partie base (74) et une paire de parties broches (76) s'étendant à partir de ladite partie base (74).

10. Raccord de conduite de fluide selon la revendication 9, dans lequel ladite partie base (74) a ladite première surface (78), et ladite paire de parties broches (76) a ladite seconde surface (80).

11. Raccord de conduite de fluide selon la revendication 1, dans lequel ledit élément de came (72) est situé au moins partiellement à l'intérieur d'un passage (44) défini dans ledit corps (26).
